# EUROPEAN PATENT SPECIFICATION

(11) **EP 3 147 964 B1**
(45) Date of publication and mention of the grant of the patent: **20.05.2020**
(21) Application number: 15796632.6
(22) Date of filing: 21.05.2015
(51) Int. Cl.: H01M 2/10, H01M 10/613, H01M 10/6563, H01M 10/625, H01M 10/627

(54) **BATTERY PACK AND BATTERY DEVICE**
BATTERIEPACK UND BATTERIEVORRICHTUNG
BLOC-BATTERIE ET DISPOSITIF DE BATTERIE

(30) Priority: 22.05.2014 JP 2014106542
(43) Date of publication of application: 29.03.2017
(73) Proprietor: Kabushiki Kaisha Toshiba, Minato-ku Tokyo 105-8001 (JP)
(72) Inventor: UCHIDA, Toshinori, Tokyo 105-8001 (JP); SEKINO, Masahiro, Tokyo 105-8001 (JP); KOSUGI, Shinichiro, Tokyo 105-8001 (JP); KURODA, Kazuto, Tokyo 105-8001 (JP); SHIMIZU, Hideo, Tokyo 105-8001 (JP)
(74) Representative: AWA Sweden AB
(86) International application number: PCT/JP2015/064632
(87) International publication number: WO 2015/178456

(56) References cited:
- EP-A1- 2 187 473
- EP-A1- 2 421 069
- WO-A1-2010/067944
- JP-A- 2003 257 390
- JP-A- 2010 003 520
- JP-A- 2013 546 124
- JP-U- S5 814 672
- US-A1- 2012 115 003
- US-A1- 2013 183 573

## Description

### FIELD

Embodiments described herein relate generally to a battery pack and a battery device.

### BACKGROUND

Conventionally, a battery pack has been known including a housing and battery modules provided on a lower wall (outer wall) of the housing and each having an inner space through which air flows.
It is preferable to attain a battery pack and a battery device of this type with a simpler structure in which a larger number of battery modules can be cooled, for example. Examples of known battery packs are disclosed in WO2010/067944A1 and EP2421069A1.

### BRIEF DESCRIPTION OF DRAWINGS

FIG. 1 is an exploded perspective view of an example of a battery pack according to a first embodiment.
FIG. 2 is a side view of a first housing member of the example of the battery pack in the first embodiment.
FIG. 3 is a perspective view of the example of the battery pack in the first embodiment with a battery module attached to a housing, when viewed from the opposite side (housing center) from an outer wall.
FIG. 4 is an exploded perspective view of FIG. 3.
FIG. 5 is an exploded perspective view of the battery module of the example of the battery pack in the first embodiment.
FIG. 6 is a perspective view of a battery cell of the example of the battery pack in the first embodiment.
FIG. 7 is a perspective view of the battery module of the example of the battery pack in the first embodiment, when viewed from the outer wall.
FIG. 8 is a perspective view of the example of the battery pack in the first embodiment with the battery module attached to the housing, seen through from the outer wall.
FIG. 9 is a side view of a first housing member of an example of a battery pack according to a second embodiment.
FIG. 10 is a side view of a first housing member of an example of a battery pack according to a third embodiment.
FIG. 11 is a side view illustrating the schematic configuration of an example of a battery pack according to a fourth embodiment.
FIG. 12 is a side view illustrating the schematic configuration of an example of a battery pack according to a fifth embodiment.
FIG. 13 is a side view illustrating the schematic configuration of an example of a battery pack according to a sixth embodiment.
FIG. 14 is a side view illustrating the schematic configuration of an example of a battery pack according to a seventh embodiment.
FIG. 15 is a side view of an example of a vehicle including a battery device according to an eighth embodiment.
FIG. 16 is a cross-sectional view of FIG. 15 along the line XVI-XVI.
FIG. 17 is a plan view of an example of the battery device in the eighth embodiment.

### DETAILED DESCRIPTION

The battery pack according to the invention is defined in the claims .

According to an embodiment, a battery pack comprises a first housing, first plurality of battery modules, second plurality of battery modules and elastic members. The first housing includes a first outer wall and a second outer wall different from the first outer wall. The first plurality of battery modules are fixed to the first outer wall. Each includes a second housing and a plurality of battery cells accommodated in the second housing. The second plurality of battery modules are fixed to the second outer wall. Each includes a second housing and a plurality of battery cells accommodated in the second housing. The elastic members are for pressing the first plurality of battery modules onto the first outer wall and pressing the second plurality of battery modules onto the second outer wall. Hereinafter, embodiments will be described with reference to the drawings. The following exemplary embodiments include the same or substantially the same components. Hereinafter, common reference numerals thus denote the same or substantially the same components and overlapping description is omitted. The configurations (technical characteristics) of the following embodiments and actions and results (effects) provided by the configurations are merely examples.

### First Embodiment

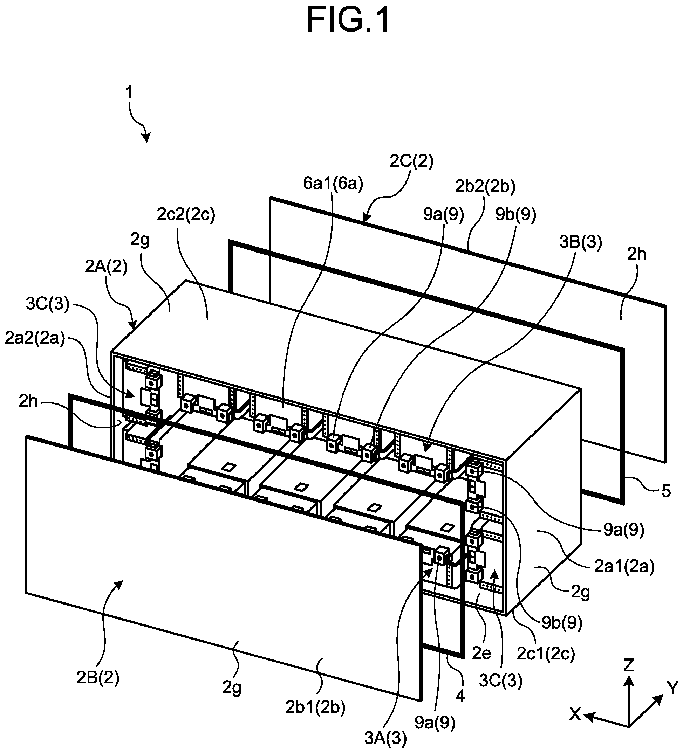

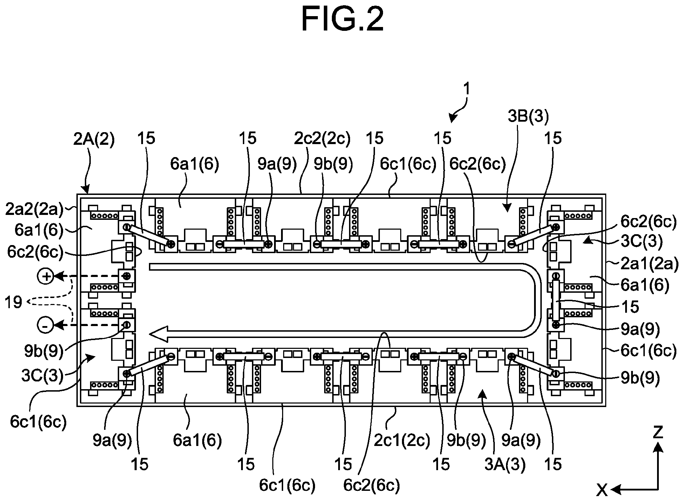

As illustrated in FIGS. 1 and 2, a battery pack 1 (battery system, assembled battery device, storage battery device) includes a housing 2 (first housing) and multiple (for example, twelve) battery modules 3 (assembled batteries) that are accommodated in the housing 2. The battery pack 1 is installed in various devices, machines, and facilities to be used as a power supply of the various devices, machines, and facilities. The battery pack 1 is used as, for example, a mobile power supply such as a power supply of trains including light rail transit (LRT) or automobiles and is also used as, for example, a stationary power supply such as a power supply for a point of sales (POS) system. Furthermore, a set of battery packs 1 according to the first embodiment can be connected in series or in parallel and mounted on various devices.

The housing 2 has a rectangular parallelepiped form. The housing 2 has walls 2a to 2c. In the embodiment, any one (for example, the wall 2c) of the walls 2a to 2c can lie along a plane for use. In the following detailed description, for the sake of convenience, directions are defined based on the posture of the wall 2c along the plane. An X direction shows the lengthwise direction of the housing 2 (the transverse direction of housings 6, the thickness direction of battery cells 7), a Y direction shows the transverse direction of the housing 2 (the lengthwise direction of the housings 6, the width direction of the battery cells 7), and a Z direction shows the height direction of the housing 2 (the height direction of the housings 6, the height direction of the battery cells 7). The X direction, the Y direction, and the Z direction are orthogonal to one another.

The wall 2a includes a wall 2a1 and a wall 2a2 spaced apart in parallel with each other along the length of the housing 2 (X direction). Both of the wall 2a1 and the wall 2a2 extend (expand) in the direction intersecting with the lengthwise direction of the housing 2 (X direction) (in the embodiment, for example, the direction orthogonal to the lengthwise direction of the housing 2, a YZ plane). The wall 2b includes a wall 2b1 and a wall 2b2 spaced apart in parallel with each other in the transverse direction of the housing 2 (Y direction). Both of the wall 2b1 and the wall 2b2 extend (expand) in the direction intersecting with the transverse direction of the housing 2 (Y direction) (in the embodiment, for example, the direction orthogonal to the transverse direction of the housing 2, an XZ plane). The wall 2a and the wall 2b can be referred to as side walls. The wall 2c includes a wall 2c1 and a wall 2c2 spaced apart in parallel with each other along the height of the housing 2 (Z direction). Both of the wall 2c1 and the wall 2c2 extend (expand) in the direction intersecting with the height direction of the housing 2 (Z direction) (in the embodiment, for example, the direction orthogonal to the height direction of the housing 2, an XY plane). The wall 2c1 can be referred to as a lower wall (bottom wall) and the wall 2c2 can be referred to as an upper wall (top wall). Each of the walls 2a to 2c has an outer face 2g and an inner face 2h. The walls 2a to 2c form the exterior of the housing 2, that is, outer walls.

The housing 2 can be a combination of multiple parts (divided elements). To be specific, in the embodiment, for example, the housing 2 includes a first housing member 2A (case) having at least the walls 2a and 2c, a second housing member 2B (first cover, first closing plate) having at least the wall 2b1, and a third housing member 2C (second cover, second closing plate) having at least the wall 2b2. An opening 33 is provided inside the first housing member 2A, penetrating through the housing 2 in the transverse direction (Y direction). The second housing member 2B is located at one side (front side in FIG. 1) of the first housing member 2A in the Y direction and closes the opening 33 from the one side. The third housing member 2C is located at the other side (rear side in FIG. 1) of the first housing member 2A in the Y direction and closes the opening 33 from the other side. The first housing member 2A, the second housing member 2B, and the third housing member 2C can be formed of, for example, a metal material.

In the embodiment, for example, seal members 4 and 5 (for example, gaskets or packings) are provided between the first housing member 2A and the second housing member 2B and between the first housing member 2A and the third housing member 2C, respectively. The seal members 4 and 5 have rectangular frame-like forms along, for example, the edges (ends, sides) of the wall 2b (opening 2e). The second housing member 2B is fixed to (integrated with) the first housing member 2A via the seal member 4 and the third housing member 2C is fixed to (integrated with) the first housing member 2A via the seal member 5. That is to say, the seal members 4 and 5 close the peripheral edges of the housing 2 in a liquid-tight manner. According to the embodiment, for example, the housing 2 can be prevented from entry of dusts, iron powder, and water droplets thereinto. The first housing member 2A, the second housing member 2B, or the third housing member 2C can be provided with a ventilation hole and a dustproof filter or a trip for covering the ventilation hole as long as entry of dusts, iron powder, or water droplet into the housing 2 can be prevented. As described above, in the embodiment, the battery modules 3 are accommodated in the housing 2 having at least dust-proof and drip-proof property.

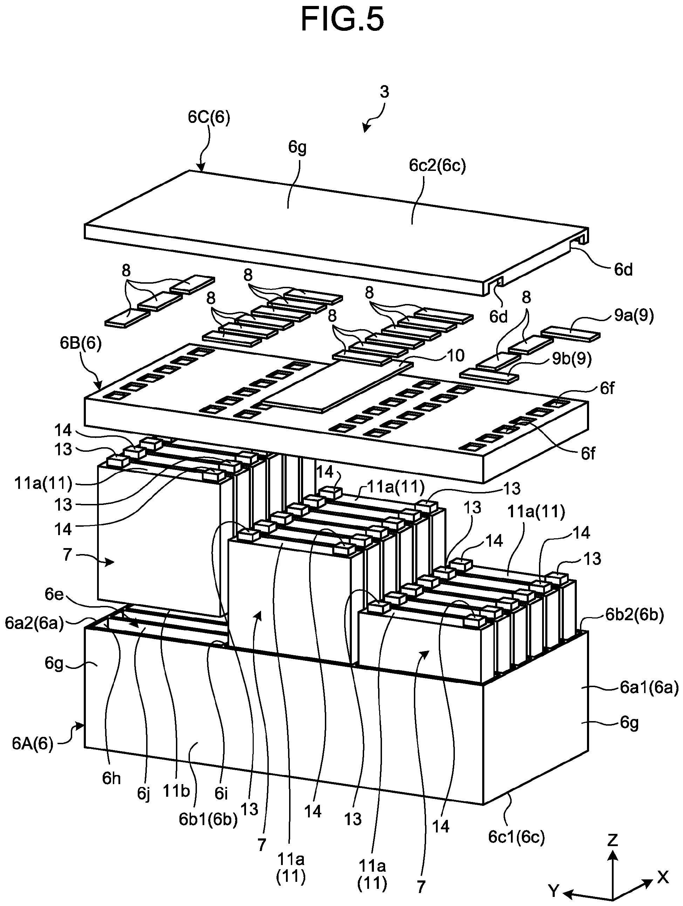

As illustrated in FIG. 5, each battery module 3 (assembled battery) includes the housing 6 (second housing), a number of battery cells (for example, eighteen battery cells) 7 (unit batteries) that are accommodated in the housing 6, and conductive members 8 and 9 electrically connected to the battery cells 7. In the embodiment, inside the housing 6 a number of battery cells (for example, six battery cells) 7 are aligned in a row in the transverse direction (X direction) and two or more (for example, three) sets, each set includes the number of battery cells (for example six battery cells), are aligned in the lengthwise direction (Y direction). Each of the battery cells 7 has a pair of a positive terminal 13 and a negative terminal 14. The positive terminals 13 and the negative terminals 14 are connected to the conductive members 8 and 9 through openings 6f of the housing 6. In each battery module 3, for example, the positive terminals 13 and the negative terminals 14 of two adjacent battery cells 7 in the lengthwise direction (Y direction) or the transverse direction (X direction) of the housing 6 are electrically connected to each other through the conductive members 8 to supply electric power through the conductive members 9 (output terminals) provided at an end of the housing 6.

The housing 6 (second housing) has a rectangular parallelepiped form. The housing 6 has walls 6a to 6c. The wall 6a includes a wall 6a1 and a wall 6a2 spaced apart in parallel with each other in the lengthwise direction of the housing 6 (Y direction). Both of the wall 6a1 and the wall 6a2 extend (expand) in the direction intersecting with the lengthwise direction of the housing 6 (Y direction) (in the embodiment, for example, the direction orthogonal to the lengthwise direction of the housing 6, the XZ plane). The wall 6b includes a wall 6b1 and a wall 6b2 spaced apart in parallel with each other in the transverse direction of the housing 6 (X direction). Both of the wall 6b1 and the wall 6b2 extend (expand) in the direction intersecting with the transverse direction of the housing 6 (X direction) (in the embodiment, for example, the direction orthogonal to the transverse direction of the housing 6, the YZ plane). The wall 6a and the wall 6b can be referred to as side walls. The wall 6c includes a wall 6c1 and a wall 6c2 spaced apart in parallel with each other in the height direction of the housing 6 (Z direction). Both of the wall 6c1 and the wall 6c2 extend (expand) in the direction intersecting with the height direction of the housing 6 (Z direction) (in the embodiment, for example, the direction orthogonal to the height direction of the housing 6, the XY plane). The wall 6c1 can be referred to as a lower wall (bottom wall) and the wall 6c2 can be referred to as an upper wall (top wall). Each of the walls 6a to 6c has an outer face 6g and an inner face 6h.

As illustrated in FIG. 5, the housing 6 has a number of walls (for example, two walls) 6i parallel with the wall 6a and a number of walls (for example, five walls) 6j parallel with the wall 6b. All of the walls 6i are located between the wall 6a1 and the wall 6a2 and extend between the wall 6b1 and the wall 6b2. The walls 6i, the wall 6a1, and the wall 6a2 are spaced apart in the lengthwise direction of the housing 6 (Y direction) and divide (partition) the inner space of the housing 6 into a number of (for example, three) accommodative regions (accommodative spaces) in the Y direction. All of the walls 6j are located between the wall 6b1 and the wall 6b2, extending between the wall 6b1 and the wall 6b2. The walls 6j, the wall 6b1, and the wall 6b2 are spaced apart in the transverse direction of the housing 6 (X direction) to divide (partition) the inner space of the housing 6 into a number of(for example, six) accommodative regions (accommodative spaces) in the X direction. That is to say, in the embodiment, the intersecting walls 6a and 6i and the intersecting walls 6b and 6j form eighteen accommodative chambers 6e in total in the housing 6. The battery cells 7 are placed in the accommodative chambers 6e one by one. The battery cells 7 and the walls 6i are alternately stacked in the Y direction and the battery cells 7 and the walls 6j are alternately stacked in the X direction in the housing 6. The walls 6i and the walls 6j can be referred to as partitions, bulkheads, or separation walls. The walls 6i and 6j are an example of an insulator.

The housing 6 can be composed a plurality of parts (divided elements). To be specific, in the embodiment, for example, the housing 6 includes a first housing member 6A (lower case, first case), a second housing member 6B (middle case, second case), and a third housing member 6C (upper case, third case, cover, lid member). The first housing member 6A includes at least the wall 6c1 and parts of the walls 6a and 6b. The second housing member 6B includes at least parts of the walls 6a and 6b. The third housing member 6C includes at least the wall 6c2 and parts of the walls 6a and 6b. At least one of the first housing member 6A, the second housing member 6B, and the third housing member 6C (for example, the first housing member 6A) includes the walls 6i and 6j. The first housing member 6A, the second housing member 6B, and the third housing member 6C can be made from a material having lower heat conductivity than the housing 2 (for example, a synthetic resin material having insulation property). The battery modules 3 are insulated from one another.

The battery cells 7 can be, for example, lithium ion secondary batteries. The battery cells 7 may be another type secondary batteries such as nickel hydrogen batteries, nickel cadmium batteries, and lead storage batteries. The lithium ion secondary batteries are a kind of non-aqueous electrolyte secondary batteries in which lithium ions in the electrolyte conduct electric conduction. Positive electrodes may be made from a material including lithium manganese composite oxide, lithium nickel composite oxide, lithium cobalt composite oxide, lithium nickel cobalt composite oxide, lithium manganese cobalt composite oxide, spinel lithium manganese nickel composite oxide, and lithium phosphorus oxide having an olivine structure, for example. Negative electrodes may be made from an oxide-based material such as lithium titanate (LTO) or niobium composite oxide represented by a general formula LiₓM(₁-_{y}) Nb _{y}Nb₂O (7+δ) where M is at least a selected one of a group consisting of Ti and Zr, and x, y, and δ are numerical values satisfying 0≤x≤6, 0≤y≤1, and -1≤δ≤1, respectively. The electrolyte (for example, electrolytic solution) can be, for example, an organic solvent such as ethylene carbonate, propylene carbonate, diethyl carbonate, ethyl methyl carbonate, and dimethyl carbonate in which lithium salt such as fluorine complex salt (for example, LiBF4 and LiPF6) is blended or a mixture of some of them.

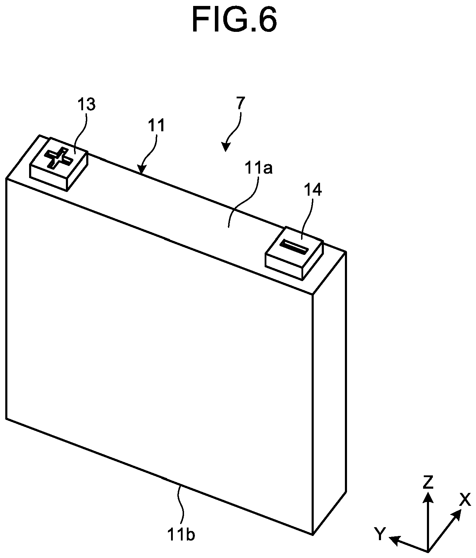

As illustrated in FIG. 6, each battery cell 7 (unit battery) includes a housing 11 (container), the positive terminal 13, and the negative terminal 14. The housing 11 has a thin, flat, rectangular parallelepiped form in the X direction. The housing 11 can be formed of, for example, a metal material or a synthetic resin material. The housing 11 accommodates therein an electrode and an electrolyte, for example. The electrode includes, for example, a positive electrode sheet, a negative electrode sheet, and an insulating layer (separator). The positive electrode sheet, the negative electrode sheet, and the insulating layer can be wound (for example, folded) to form the electrode of a flattened shape. The electrode is an electrode group and functions as a power generating element. The positive terminal 13 and the negative terminal 14 are provided on a face 11a (upper face, top face) of the housing 11. To be specific, the positive terminal 13 is located at one end of the face 11a and the negative terminal 14 is located at the other end of the face 11a in the Y direction. The positive terminal 13 penetrates through the face 11a of the housing 11 and is connected to a positive lead of the electrode inside the housing 11. The negative terminal 14 penetrates through the face 11a of the housing 11 and is connected to a negative lead of the electrode inside the housing 11. Both of the positive terminal 13 and the negative terminal 14 can be formed of a conductive material.

As illustrated in FIG. 5, with the respective faces 11a facing in the same direction (upward in FIG. 5), the battery cells 7 are aligned along the length (Y direction) and the width (X direction) of the housing 6. The battery cells 7 are aligned such that, for example, the positive terminals 13 and the negative terminals 14 are alternately arranged along the lengthwise direction (Y direction) and the transverse direction (X direction) of the housing 6.

For assembly of the battery modules 3, in the embodiment, for example, an adhesive is poured (runs into, injected) between the battery cells 7 and the inner faces 6h of the accommodative chambers 6e in which the battery cells 7 are placed. The battery cells 7 are then fixed to (that is, adhered to) the walls 6a and 6b (side walls) and the walls 6i and 6j (partitions) with the solidified adhesive. The adhesive may be applied in advance onto the inner face 6h of the wall 6c1 (bottom wall) and faces 11b (lower faces, bottom faces) of the housings 11 before the battery cells 7 are placed in the accommodative chambers 6e. With no adhesive between the wall 6c1 and the faces 11b, the faces 11b (battery cells 7) are directly connected to the wall 6c1 (housing 6). On the other hand, with presence of the adhesive between the wall 6c1 and the faces 11b, the faces 11b (battery cells 7) are indirectly connected to the wall 6c1 (housing 6) through the adhesive. The adhesive has heat conductivity. In the embodiment, the wall 6c1 of the housing 6 is thus thermally connected to all the battery cells 7 accommodated in the housing 6.

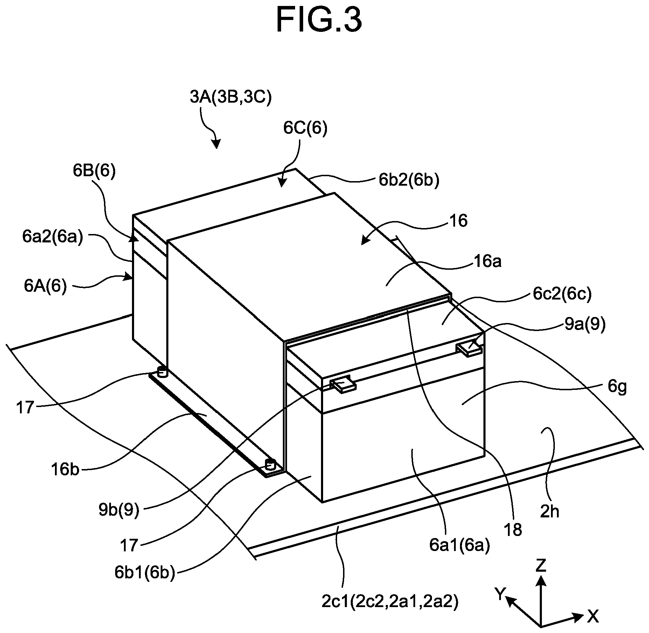

The conductive members 8 and 9 can be thin plate-like bus bars. The conductive members 8 and 9 are joined (fixed, connected) to the positive terminals 13 and the negative terminals 14 that are exposed from the openings 6f of the second housing member 6B by, for example, welding. Furthermore, one of the pair of conductive members 9 functions as a positive terminal 9a and the other functions as a negative terminal 9b. The positive terminal 9a is connected to the positive terminal 13 of one of the battery cells 7 and the negative terminal 9b is connected to another negative terminal 14 of the battery cell 7 that differs from the battery cell 7 connected to the positive terminal 9a. As illustrated in FIGS. 3 to 5, the positive terminal 9a and the negative terminal 9b while projecting from the wall 6a1 are placed (accommodated) in cutouts 6d (recesses, grooves) of the third housing member 6C. The positive terminal 9a and the negative terminal 9b function as output terminals of the battery modules 3. A substrate 10 is provided on the second housing member 6B. The substrate 10 is electrically connected to, for example, the conductive members 8 and 9 and a temperature sensor (not shown) and can function as a monitoring substrate for monitoring the voltages and temperatures of the batteries and a control substrate for controlling the batteries. The substrate 10 is located substantially at the center of the second housing member 6B in the Y direction. That is to say, the conductive members 8 and 9 and the temperature sensor are located further outside than the substrate 10 in the Y direction. Although in the embodiment, the substrate 10 is provided on the second housing member 6B (battery module 3), the substrate 10 is omissible. In this case, the functions of the substrate 10 may be divided and incorporated in the battery cells 7.

As illustrated in FIGS. 1 and 2, in the first embodiment, the battery modules 3 each includes first battery modules 3A, second battery modules 3B, and third battery modules 3C. The first battery modules 3A are attached to the wall 2c1 (lower wall) of the housing 2 and are thermally connected to the wall 2c1. The second battery modules 3B differ from the first battery modules 3A among the battery modules 3, are attached to the wall 2c2 (upper wall) of the housing 2, and are thermally connected to the wall 2c2. The third battery modules 3C differ from the first battery modules 3A and the second battery modules 3B among the battery modules 3, are attached to the wall 2a (side wall) of the housing 2, and are thermally connected to the wall 2a. In the embodiment, for example, four first battery modules 3A are aligned in the X direction (first direction) on the wall 2c1 and four second battery modules 3B are aligned in the X direction (first direction) on the wall 2c2. Two of four third battery modules 3C are aligned in the Z direction on the wall 2a1 and the other two third battery modules 3C are aligned in the Z direction on the wall 2a2. Thus, in the embodiment, the first battery modules 3A, the second battery modules 3B, and the third battery modules 3C are arranged circumferentially as a whole. As described above, in the embodiment, all the battery modules 3 are attached to the outer walls (peripheral walls), the walls 2a1, 2a2, 2c1, and 2c2. In the embodiment, the wall 2c1 is an example of a first outer wall and the wall 2c2 is an example of a second outer wall.

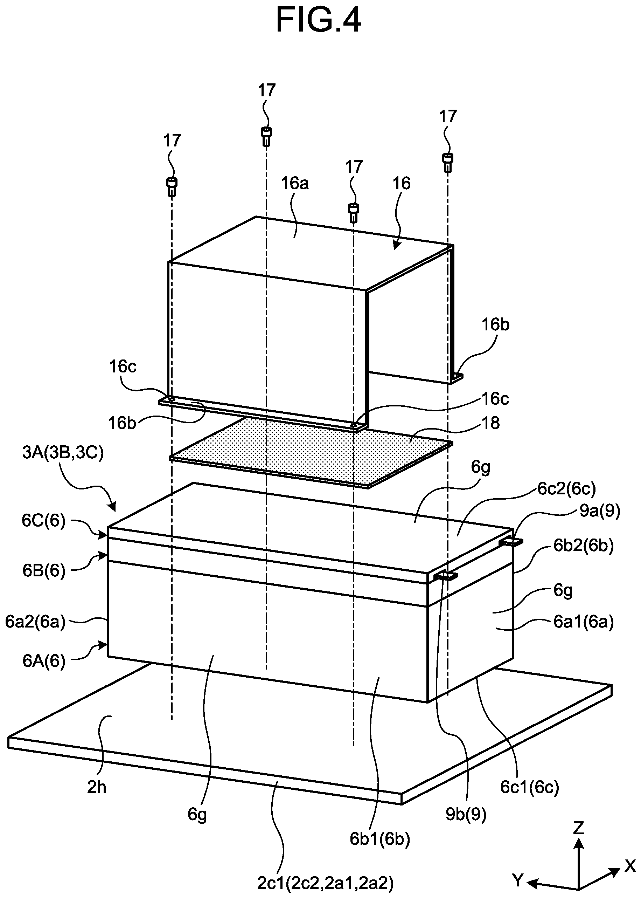

The battery modules 3 are attached to the walls 2a1, 2a2, 2c1, and 2c2 with the respective walls 6a1 facing in the same direction (front side in the Y direction in FIG. 1). The positive terminals 9a and the negative terminals 9b are provided on the walls 6a1. As illustrated in FIGS. 4 and 5, the positive terminals 9a and the negative terminals 9b are located closer to the walls 6c2 (upper walls) than the walls 6c1 (lower walls) thermally connected to the battery cells 7. In the first embodiment, the walls 6c1 are an example of a first wall and the walls 6c2 are an example of a second wall.

As illustrated in FIG. 2, the walls 6c1 (lower walls) of the battery modules 3 face the walls 2a1, 2a2, 2c1, and 2c2 to which the respective battery modules 3 are attached. To be specific, the walls 6c1 of the first battery modules 3A oppose the wall 2c1 and the walls 6c1 of the second battery modules 3B oppose the wall 2c2. The walls 6c1 of the third battery modules 3C at one side (right side in FIG. 2) in the X direction oppose the wall 2a1 while the walls 6c1 of the third battery modules 3C at the other side (left side in FIG. 2) in the X direction oppose the wall 2a2. That is, the first battery modules 3A and the second battery modules 3B are provided in reversed states (postures) from each other along the height of the housing 2 (Z direction) and the third battery modules 3C at one side and the other side in the X direction are provided in reversed states (postures) from each other along the length of the housing 2 (X direction). The positive terminals 9a of the respective first battery modules 3A are thus located at one side (right side in FIG. 2) and the positive terminals 9a of the respective second battery modules 3B are located at the other side (left side in FIG. 2) in the X direction (first direction). In the third battery modules 3C at one side (right side in FIG. 2) in the X direction, the respective positive terminals 9a are located at one side (upper side in FIG. 2) in the Z direction. In the third battery modules 3C at the other side (left side in FIG. 2) in the X direction, the respective positive terminals 9a are located at the other side (lower side in FIG. 2) in the Z direction. In the first battery modules 3A, the second battery modules 3B, and the third battery modules 3C, the negative terminals 9b are located on the opposite side from the respective positive terminals 9a.

In the battery pack 1, for example, the positive terminals 9a and the negative terminals 9b of the two adjacent battery modules 3 along the length (X direction) and the height (Z direction) of the housing 2 are electrically connected to each other via conductive members 15 to supply electric power through a pair of conductive members 19 provided on the end of the housing 2. One of the pair of conductive members 19 is connected to the positive terminal 9a of one of the battery modules 3 and the other is connected to the negative terminal 9b of the battery module 3 other than the battery module 3 connected to the one of the pair of conductive members 19. In the embodiment, the battery modules 3 are arranged circumferentially as a whole and the positive terminals 9a and the negative terminals 9b are alternately aligned along the circumference. Because of this, according to the embodiment, for example, the battery modules 3 can be connected (electrically connected) circumferentially through the conductive members 15. This can attain a series circuit of the battery modules 3 with any pair of the adjacent battery modules 3 considered to be at one end and at the other end. This, for example, heightens the degree of freedom at which the pair of conductive members 19 (for example, output cables) are laid out. Furthermore, in the embodiment, the positive terminals 9a and the negative terminals 9b of the respective battery modules 3 are located closer to the walls 6c2 (to the center of the housing 2). According to the embodiment, this can reduce, for example, the entire length of the conductive members 15.

As illustrated in FIGS. 3 and 4, the battery modules 3, that is, the first battery modules 3A, the second battery modules 3B, and the third battery modules 3C are joined (fixed) to the walls 2a1, 2a2, 2c1, and 2c2 on which the respective battery modules are mounted with brackets 16 and fasteners 17 (for example, screws and bolts). Each bracket 16 includes a substantially U-shaped base 16a overlying the pair of walls 6b1 and 6b2 and the wall 6c2 of each housing 6, and projections 16b in a flange form from the outer edges of the base 16a and overlying the inner face 2h. The projections 16b are provided with openings 16c (see FIG. 4) into which the fasteners 17 are inserted. The height of the brackets 16 (height in the Z direction) is substantially the same as the height of the housings 6 (height in the Z direction). In the embodiment, thin plate-like elastic members 18 are interposed between the bases 16a and the walls 6c2. The elastic members 18 can be formed of, for example, rubber, elastomer, a synthetic resin material, or a silicone resin material. Inserted into the openings 16c of the brackets, the fasteners 17 are elastically contracted and joined 16 (fixed) to the walls 2a1, 2a2, 2c1, and 2c2 to which the respective battery modules 3 are attached. The brackets 16 and the fasteners 17 are examples of connectors to join the housing 2 and the housings 6. The connectors may be, for example, bands, an adhesive, or double-sided tapes. The housings 6 may be joined (fixed) to the housing 2 with a foamed material (including foamed urethane) filling the housing 2.

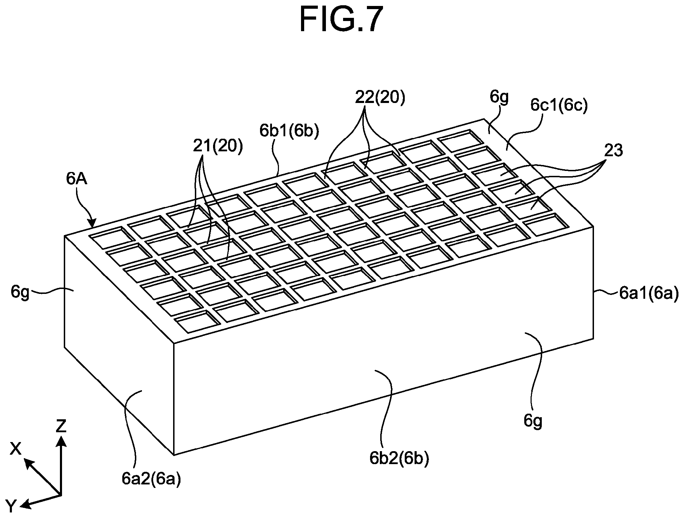

As illustrated in FIG. 7, a first part 20 is provided on the wall 6c1 (bottom wall) of each housing 6. The first part 20 includes first members 21 (walls, ribs) extending along the length of the housing 6 (Y direction) and second members 22 (walls, ribs) extending along the width of the housing 6 (X direction). The first members 21 are spaced apart in parallel with one another in the transverse direction of the housing 6 (X direction). The second members 22 are spaced apart in parallel with one another in the lengthwise direction of the housing 6 (Y direction). The first part 20 has a lattice form of the first members 21 and the second members 22 connecting and intersecting one another. In the embodiment, for example, the first part 20 is provided with rectangular concave portions 23 (grooves) surrounded by the two first members 21 and the two second members 22. The concave portions 23 lowers toward the inner face 6h from the outer face 6g of the wall 6c1. With the embodiment, the lattice-formed first part 20 provided on the wall 6c1 can help increase the rigidity and strength of the housing 6.

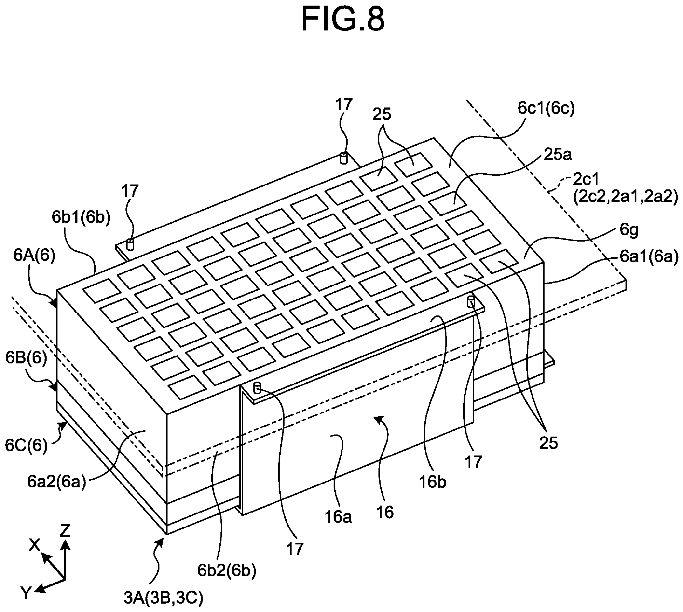

As illustrated in FIG. 8, heat conducting members 25 are interposed between the walls 6c1 (bottom walls) and the walls 2a1, 2a2, 2c1, and 2c2 to which the respective battery modules are attached. The heat conducting members 25 can be made from, for example, a synthetic resin material containing a heat conductive filler (metal material). In the embodiment, for example, the heat conducting members 25 divided into thin plates are placed (accommodated) in the concave portions 23 of the walls 6c1. The thickness of the heat conducting members 25 (thickness in the Z direction) is set to be slightly larger than the depth of the concave portions 23 (depth in the Z direction). The battery modules 3 are joined (fixed) to the walls 2a1, 2a2, 2c1, and 2c2 while the heat conducting members 25 are elastically contracted. When the walls 6c1 is joined (fixed) to the walls 2a1, 2a2, 2c1, and 2c2, the outer faces 6g of the walls 6c1 and the surfaces 25a of the heat conducting members 25 flush with each other. The heat conducting members 25 are an example of a heat conductive layer. The heat conductive layer may be, for example, a heat conductive sheet, grease, or an adhesive. The heat conducting members 25 may include thin plate-like bases and projections projecting from the bases and the projections may be placed in the concave portions 23. In the embodiment, the housings 6 of the first battery modules 3A and the wall 2c1 are thermally connected to each other and the housings 6 of the second battery modules 3B and the wall 2c2 are thermally connected to each other. The housings 6 of the third battery modules 3C at one side (right side in FIG. 2) in the X direction and the wall 2a1 are thermally connected to each other and the housings 6 of the third battery modules 3C at the other side (left side in FIG. 2) in the X direction and the wall 2a2 are thermally connected to each other. The housings 6 of the battery modules 3 and the housing 2 may be thermally connected to each other with no heat conducting members 25 interposed therebetween.

As illustrated in FIGS. 3 and 4, according to the embodiment, the elasticity of the elastic members 18 causes the walls 6c1 and the heat conducting members 25 to be pressed onto the walls 2a1, 2a2, 2c1, and 2c2 on which they are mounted. According to the embodiment, the heat of the battery cells 7 accommodated in the housings 6 can be effectively transferred to the walls 2a1, 2a2, 2c1, and 2c2 through the walls 6c1 and the heat conducting members 25.

As described above, in the embodiment, for example, the battery modules 3 include at least one (in the embodiment, four) first battery module(s) 3A connected to the wall 2c1 (first outer wall) and at least one (in the embodiment, four) second battery module(s) 3B connected to the wall 2c2 (second outer wall). According to the embodiment, for example, the heat from the battery cells 7 of the first battery modules 3A and the second battery modules 3B can be transferred and released to the walls 2c1 and 2c2 through the respective housings 6. A larger number of battery modules 3 can be thus cooled by a simpler structure, for example.

In the embodiment, for example, the wall 2c1 (first outer wall) and the wall 2c2 (second outer wall) face each other. According to the embodiment, for example, the two facing walls 2c1 and 2c2 can be used to transfer heat from the battery modules 3 located between the walls 2c1 and 2c2.

Furthermore, in the embodiment, for example, a number (in the embodiment, four) of first battery modules 3A are aligned in the X direction (first direction). The positive terminals 9a of the respective first battery modules 3A are located at one side and the negative terminals 9b thereof are located at the other side in the X direction. According to the embodiment, for example, the connection of the first battery modules 3A aligned in the X direction can be relatively facilitated via the conductive members 15 and the series circuit of the first battery modules 3A can be attained relatively easily.

In the embodiment, for example, a number (in the embodiment, four) of second battery modules 3B are aligned in the X direction (first direction). The positive terminals 9a of the respective second battery modules 3B are located at the other side and the negative terminals 9b thereof are located at one side in the X direction. That is to say, they are arranged reversely to the positive terminals 9a and the negative terminals 9b of the first battery modules 3A. According to the embodiment, for example, a series circuit including the first battery modules 3A and the second battery modules 3B can be attained relatively easily.

In the embodiment, for example, the housings 6 of the first battery modules 3A and the second battery modules 3B include the walls 6c1 (first walls) connected to the walls 2c1 and 2c2 and the walls 6c2 (second walls) opposite the walls 6c1. The positive terminals 9a and the negative terminals 9b are located closer to the walls 6c2 of the housings 6 than the walls 6c1 thereof. According to the embodiment, for example, the positive terminals 9a and the negative terminals 9b of the first battery modules 3A and the second battery modules 3B can be placed closer to the center (inner circumference) of the housing 2. This can thus shorten the entire length of the conductive members 15 from that when the positive terminals 9a and the negative terminals 9b of the first battery modules 3A and the second battery modules 3B are located closer to the outer circumference of the housing 2, for example.

In the embodiment, for example, the housings 6 of the first battery modules 3A and the second battery modules 3B include the walls 6c1 (first walls) connected to the walls 2c1 and 2c2 and the walls 6c2 (second walls) opposite the walls 6c1, and the battery cells 7 are connected to the walls 6c1. According to the embodiment, for example, the heat of the battery cells 7 can be transferred and released to the walls 2c1 and 2c2 through the walls 6c1. This can thus more effectively cool (the battery cells 7 of) the first battery modules 3A and the second battery modules 3B than the structure that not the walls 6c1 of the housings 6 but different walls are connected to the walls 2c1 and 2c2, for example.

In the embodiment, for example, the battery modules 3 are accommodated in the housing 2 (first housing) having at least dust-proof and drip-proof property. According to the embodiment, for example, the housing 2 can be prevented from entry of dusts, iron powder, and water droplets. For example, by ensured dust-proof and drip-proof property of the housing 2, the battery modules 3 can be less affected by dusts or water and can exert enhanced heat dissipation.

The embodiment includes, for example, the elastic members 18 that press the housings 6 of the first battery modules 3A and the second battery modules 3B onto the walls 2c1 and 2c2. According to the embodiment, for example, by the elasticity of the elastic members 18, the walls 6c1 of the housings 6 and the walls 2c1 and 2c2 can be tightly adhered to each other. Thus, the heat of the battery cells 7 can be more effectively transferred to the walls 2c1 and 2c2 through the walls 6c1 of the housings 6.

In the embodiment, for example, the housing 2 is formed of the material (metal material) having heat conductivity higher than that of the housings 6 of the battery modules 3. According to the embodiment, for example, the heat of the battery cells 7 accommodated in the housings 6 can be transferred to the housing 2 more effectively through the housings 6. Although in the embodiment, the entire housing 2 is formed of the metal material, at least a part of the housing 2 (for example, the part to which the walls 6c1 are attached) may be formed of the metal material. Furthermore, although in the embodiment, the battery modules 3 are attached and thermally connected to the four outer walls, the walls 2a1, 2a2, 2c1, and 2c2, the battery modules 3 may further be attached and thermally connected to the outer walls, the wall 2b1 and the wall 2b2. In addition, convecting (circulating) fluid (such as air or liquid) may be injected into the housing 2. The convection can transport heat generated by the battery modules 3.

### Second Embodiment

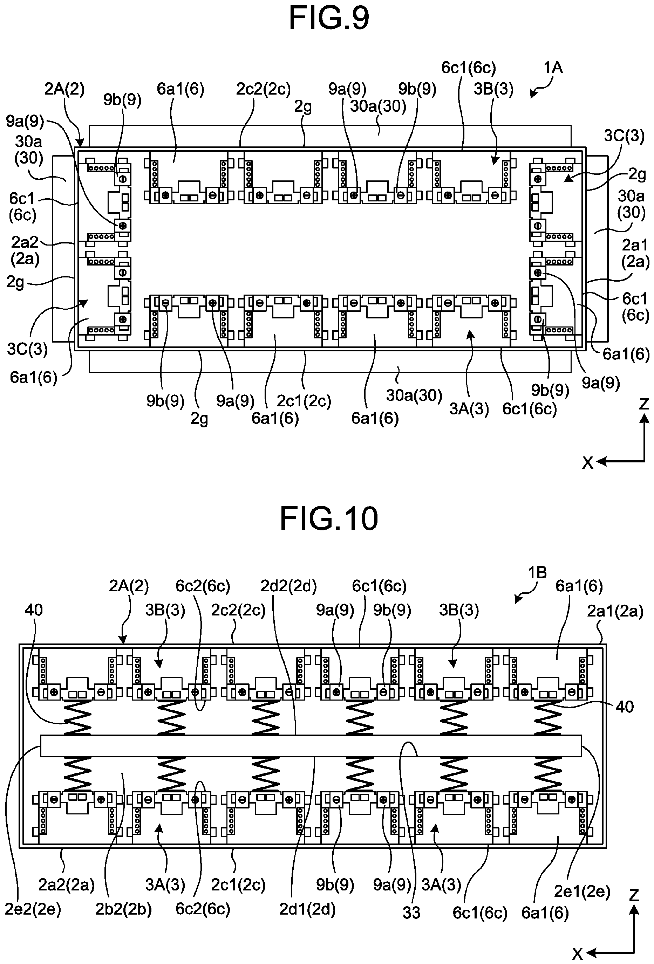

A battery pack 1A according to an embodiment illustrated in FIG. 9 has the same configuration as the battery pack 1 in the first embodiment. This embodiment thus provides the same results (effects) by the same configuration as the first embodiment.

However, in the second embodiment, for example, as illustrated in FIG. 9, the battery back 1A includes cooling mechanisms 30 on the four walls 2a1, 2a2, 2c1, and 2c2 to which the first battery modules 3A, the second battery modules 3B, and the third battery modules 3C are fixed. The cooling mechanisms 30 include, for example, heat sinks (heat dissipaters) 30a. In the second embodiment, the plate-like heat sinks 30a are thermally fixed to the outer faces 2g of the respective walls 2a1, 2a2, 2c1, and 2c2. According to the embodiment, for example, the heat of the battery cells 7 is transferred to the heat sinks 30a from the walls 6c1 of the housings 6 through the walls 2a1, 2a2, 2c1, and 2c2 and is dissipated from the heat sinks 30a. Thus, the first battery modules 3A, the second battery modules 3B, and the third battery modules 3C, for example, can be cooled more effectively. The cooling mechanisms 30 may additionally include fans for cooling the heat sinks 30a. The cooling mechanisms 30 may be configured of water-cooling units (oil-cooling units) that circulates coolant along the walls 2a1, 2a2, 2c1, and 2c2. Although in the embodiment, the cooling mechanism 30 (heat sinks 30a) are provided on the respective four walls 2a1, 2a2, 2c1, and 2c2, the cooling mechanism 30 may be provided on one of them (for example, the wall 2c2). In this case, one cooling mechanism 30 can cool the four walls 2a1, 2a2, 2c1, and 2c2 as long as the four walls 2a1, 2a2, 2c1, and 2c2 are thermally connected to one another as in the embodiment.

### Third Embodiment

A battery pack 1B according to an embodiment illustrated in FIG. 10 has the same configuration as the battery pack 1 in the first embodiment. This embodiment thus provides the same results (effects) by the same configuration as the first embodiment.

However, in the third embodiment, for example, as illustrated in FIG. 10, six first battery modules 3A are aligned on the wall 2c1 in the X direction (first direction) and six second battery modules 3B are aligned on the wall 2c2 in the X direction (first direction). That is to say, in the embodiment, no third battery modules 3C (see FIG. 1) are provided. Furthermore, in the embodiment, the housing 2 is provided with an opening 33. The opening 33 can be, for example, a through-hole in the housing 2 in the transverse direction (Y direction, see FIG. 1). Square cylindrical walls 2d and 2e are provided on at least one (for example, the wall 2b2) of the wall 2b1 and the wall 2b2 to connect the edges of the opening 33 in the wall 2b1 and the wall 2b2. The wall 2d includes walls 2d1 and 2d2 spaced apart from each other in the Z direction, extending in parallel in the X direction. The wall 2e includes walls 2e1 and 2e2 spaced apart from each other in the X direction, extending in parallel in the Z direction. As described above, the opening 33 is configured (formed) of the six walls 2b1, 2b2, 2d1, 2d2, 2e1, and 2e2. Elastic members 40 are interposed between the wall 2d1 and the walls 6c2 of the first battery modules 3A and between the wall 2d2 and the walls 6c2 of the second battery modules 3B. The elastic members 40 can be made of, for example, springs. In the embodiment, the housings 6 of the first battery modules 3A and the second battery modules 3B are fixed to the walls 2c1 and 2c2 while pressed onto the walls 2c1 and 2c2 by the elastic members 40. According to the embodiment, the elastic members 40 can also serve as securing members for the housing 2 and the housings 6, which can reduce, for example, the number of parts or components of the battery pack 1B. By the elasticity of the elastic members 40, the walls 6c1 of the housings 6 and the walls 2c1 and 2c2 can be tightly adhered to each other, resulting in more effectively transferring the heat of the battery cells 7 to the walls 2c1 and 2c2 through the walls 6c1 of the housings 6.

### Fourth Embodiment

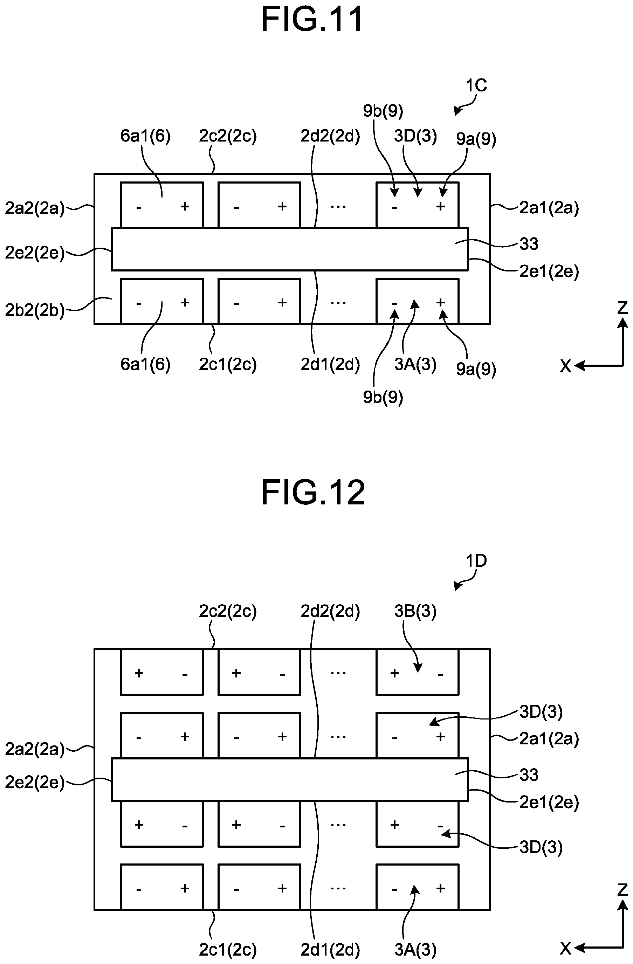

A battery pack 1C according to an embodiment illustrated in FIG. 11 has the same configuration as the battery pack 1 in the first embodiment. This embodiment thus provides the same results (effects) by the same configuration as the first embodiment.

However, in the fourth embodiment, for example, as illustrated in FIG. 11, the battery modules 3 include the first battery modules 3A and fourth battery modules 3D. The first battery modules 3A are attached to the wall 2c1 (lower wall) of the housing 2. The fourth battery modules 3D differ from the first battery modules 3A among the battery modules 3 and are fixed to the wall 2d2 of the housing 2. The wall 2d2 is separated from the wall 2c1 and constructs (forms) a part of the opening 33 as in the third embodiment. The wall 2d2 is opposite to the wall 2d1 facing the wall 2c1. That is to say, the wall 2c1 and the wall 2d2 do not face each other. In the fourth embodiment, the wall 2c1 is an example of the first outer wall and the wall 2d2 is an example of the second outer wall. The first battery modules 3A and the fourth battery modules 3D are arranged in the same posture on the walls 2c1 and 2d2, respectively. To be specific, the first battery modules 3A and the fourth battery modules 3D are placed with the positive terminals 9a at one side (right side in FIG. 11) and the negative terminals 9b at the other side (left side in FIG. 11) in the X direction (first direction). The first battery modules 3A and the fourth battery modules 3D can be joined (fixed) to the walls 2c1 and 2d2, respectively, with, for example, the brackets 16 and the fasteners 17 (see FIG. 2). According to the embodiment, for example, the heat of the battery cells 7 of the first battery modules 3A and the fourth battery modules 3D can be transferred and released to the walls 2c1 and 2d2 through the respective housings 6. Although in the embodiment, the opening 33 is configured as the through-hole in the housing 2, the opening 33 may be a recess in the walls (for example, the walls 2b1 and 2b2 (side walls), see FIG. 1) of the housing 2.

### Fifth Embodiment

A battery pack 1D according to an embodiment illustrated in FIG. 12 has the same configuration as the battery pack 1 in the first embodiment. This embodiment thus provides the same results (effects) by the same configuration as the first embodiment.

However, in the fifth embodiment, for example, as illustrated in FIG. 12, the battery modules 3 include the first battery modules 3A thermally connected to the wall 2c1, the second battery modules 3B thermally connected to the wall 2c2, and the fourth battery modules 3D thermally connected to the walls 2d1 and 2d2. In the fifth embodiment, for example, the first battery modules 3A and the fourth battery modules 3D on the wall 2d1 are reversed (in postures) from each other in the height direction (Z direction) and the second battery modules 3B and the fourth battery modules 3D on the wall 2d2 are reversed (in postures) from each other in the height direction (Z direction). In the fifth embodiment, the wall 2c1 is an example of the first outer wall and the walls 2c2, 2d1, and 2d2 are examples of the second outer wall.

### Sixth Embodiment

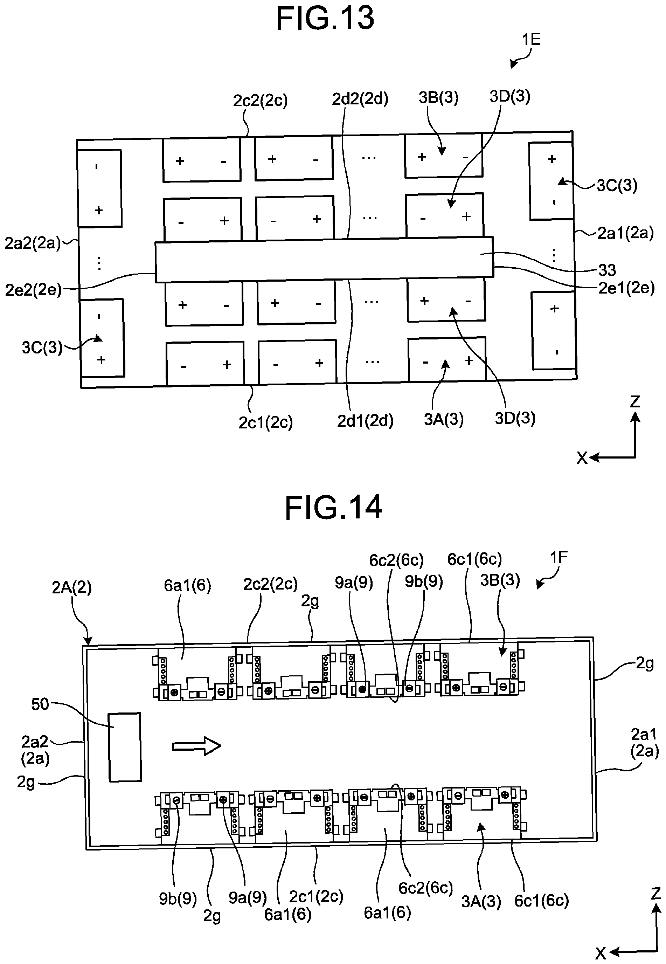

A battery pack 1E according to an embodiment illustrated in FIG. 13 has the same configuration as the battery pack 1 in the first embodiment. This embodiment thus provides the same results (effects) by the same configuration as the first embodiment.

However, in the sixth embodiment, for example, as illustrated in FIG. 13, the battery modules 3 include the first battery modules 3A thermally connected to the wall 2c1, the second battery modules 3B thermally connected to the wall 2c2, the third battery modules 3C thermally connected to the walls 2a1 and 2a2, and the fourth battery modules 3D thermally connected to the walls 2d1 and 2d2. In the sixth embodiment, all the battery modules 3 are attached to the six outer walls, the walls 2a1, 2a2, 2c1, 2c2, 2d1, and 2d2.

### Seventh Embodiment

A battery pack 1F according to an embodiment illustrated in FIG. 14 has the same configuration as the battery pack 1 in the first embodiment. This embodiment thus provides the same results (effects) by the same configuration as the first embodiment.

However, in the seventh embodiment, for example, as illustrated in FIG. 14, a fan unit 50 is provided in the housing 2 of the battery pack 1F. The fan unit 50 is an example of a first fluid moving unit. The battery modules 3 are accommodated in the substantially sealed housing 2 having dust-proof and drip-proof property. In the embodiment, the fan unit 50 circulates the air (fluid) in the substantially sealed housing 2 (causes the air (fluid) to flow). Thus, the heat in the housing 2 can be easily transferred to the outer walls, the walls 2a1, 2a2, 2c1, and 2c2, and the walls 2b1 and 2b2 (see FIG. 1), thereby enhancing the heat dissipation of the battery modules 3. As illustrated in FIG. 14, in the embodiment, the fan unit 50 is provided, facing the space between the first battery modules 3A and the second battery modules 3B separated from each other, and generates airflow along the respective surfaces of the walls 6c2 of the housings 6. As described above, since the heat of the battery cells 7 of the first battery modules 3A and the second battery modules 3B is transferred to the housing 2 from the walls 6c1 of the respective housings 6, the walls 6c2 side (the positive terminals 9a and the negative terminals 9b, the center of the housing 2) may be higher in temperature than the walls 6c1 side. In view of this, in the embodiment, the airflow from the fan unit 50 can transport heat from the side of the walls 6c2 (closer to the center of the housing 2) efficiently, which can advantageously reduce variation in the cooling effect (temperature) of the battery modules 3 depending on locations. This may accordingly extend the lifetime of the battery modules 3 and the battery pack 1F, for example. The cooling mechanisms 30 (see FIG. 9) in the second embodiment may be provided on the walls 2a1, 2a2, 2b1, 2b2, 2c1, and 2c2 of the housing 2. The cooling mechanisms 30 can cool the battery modules 3 more effectively. Although the seventh embodiment exemplifies the fan unit 50 that causes the air in the housing 2 to flow, it should not be limited to the fan unit 50. Alternatively, for example, liquid (fluid) may be poured into in the housing 2 to contact with the battery modules 3 and a fluid moving unit may be disposed to cause the liquid in the housing 2 to flow.

### Eighth Embodiment

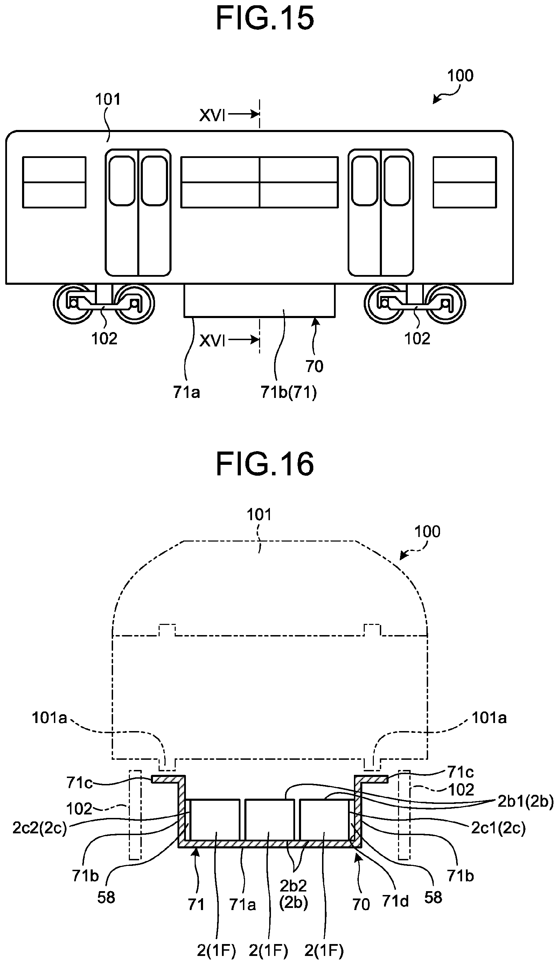

As illustrated in FIGS. 15 to 17, a battery device 70 (battery system, storage battery device) includes, for example, a container 71 (housing, case), a number (for example, three) of battery packs 1F that are accommodated in the container 71, and a fan unit 60. The battery device 70 can be installed on various devices, machines, and facilities, and used as a power supply of the various devices, machines, and facilities. Although the eighth embodiment exemplifies the battery device 70 mounted under the floor of a railway vehicle 100, the battery device 70 in the embodiment should not be limited thereto. The battery device 70 may be mounted, for example, on the roof of the railway vehicle 100 or on vehicles other than the railway vehicle 100, such as buses (automobiles). Although in the eighth embodiment, the battery device 70 includes the battery packs 1F of the seventh embodiment, the battery device 70 may include any of the battery packs 1, 1A and 1E of the first to six embodiments instead of the battery packs 1F. In addition, although in the embodiment, the three battery packs 1F are provided in the container 71 of the battery device 70, one, two, four or more battery packs 1F may be provided.

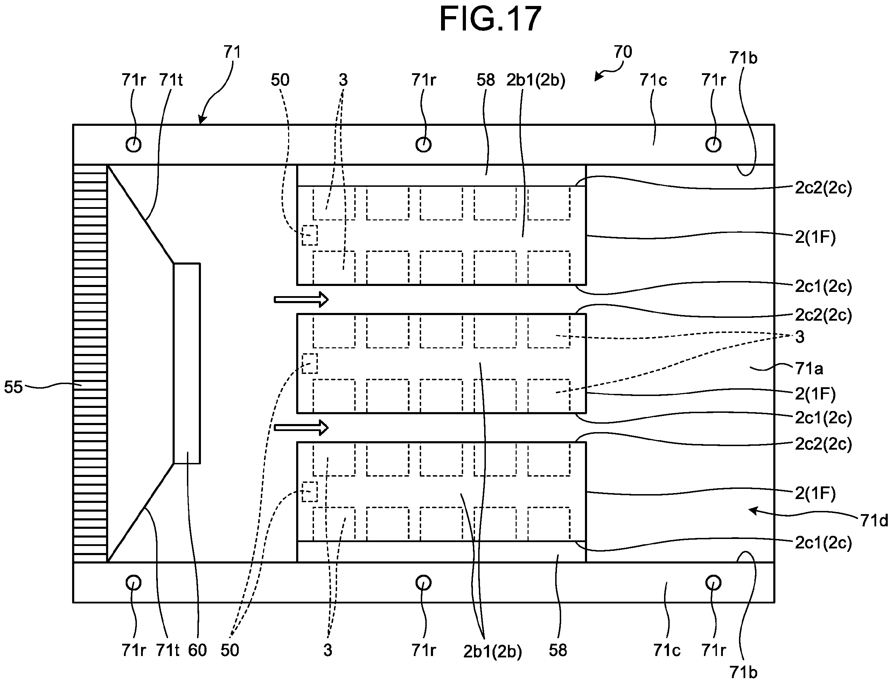

As illustrated in FIGS. 16 and 17, the container 71 has walls 71a to 71c. The wall 71a has a vertically long rectangular form in the front-rear direction (traveling direction) of the railway vehicle 100 in a plan view. The wall 71a is referred to as a lower wall or a bottom wall and, for example, faces (opposes, overlaps) the walls 2b (2b2) of the battery packs 1F. The walls 71b are provided on both side ends of the wall 71a in the transverse direction and project from the wall 71a to one side (upward in FIG. 16) along the thickness. In the embodiment, the transverse direction of the wall 71a corresponds to the width direction of the railway vehicle 100, the lengthwise direction of the wall 71a corresponds to the front-rear direction of the railway vehicle 100, and the thickness direction of the wall 71a corresponds to the vertical direction of the railway vehicle 100. The walls 71b are referred to as side walls or standing walls and, for example, face (oppose, overlap) the walls 2c (2c1 and 2c2) of the battery packs 1F. As illustrated in FIG. 16, the container 71 is provided with a recess 71d formed by the connected wall 71a and two walls 71b, opened to one side (upward in FIG. 16) of the wall 71a along the thickness. As also illustrated in FIG. 17, the battery packs 1F are accommodated (placed) in the recess 71d with a spacing along the width of the railway vehicle 100 with the lengthwise direction coinciding with the front-rear direction of the railway vehicle 100. The battery packs 1F can be joined (fixed) to the container 71 with, for example, connectors such as an adhesive or the brackets 16 and the fasteners 17 (see FIG. 3).

The walls 71c are provided on side ends (upper side in FIG. 16) of the walls 71b in the height direction and project from the walls 71b to outside the wall 71a in the transverse direction. The walls 71c are referred to as protrusions, flanges, or the like, and face (oppose, overlap) a mount 101a provided on a body 101 of the railway vehicle 100. As illustrated in FIG. 17, the walls 71c is provided with openings 71r spaced apart from each other in the front-rear direction of the railway vehicle 100. In the embodiment, for example, the container 71 is joined (fixed) to the vehicle body 101 by insertion of bolts through the openings 71r in the walls 71c and openings (not illustrated) in the mount 101a and their engagement with nuts.

As illustrated in FIG. 17, the fan unit 60 is provided in the container 71. The fan unit 60 generates airflow that is sucked from one side end of the recess 71d in the lengthwise direction (front-rear direction of the railway vehicle 100) and discharged from the other side end. The fan unit 60 is an example of a second fluid moving unit. Sucked into the container 71 by the fan unit 60, the air flows through the gaps (passages) between the two adjacent battery packs 1F to downstream of the battery packs 1F. That is to say, the fan unit 60 generates airflow along the surfaces of the opposing walls 2c1 and 2c2 of the battery packs 1F. Thereby, the airflow can cool the walls 2c1 and 2c2 to which the battery modules 3 are thermally connected, and enhance the heat dissipation of the battery packs 1F.

As illustrated in FIG. 16, heat conducting members 58 are provided between the two walls 71b of the container 71 and the two battery packs 1F at both sides of the railway vehicle 100 in the width direction. The heat generated in the two battery packs 1F is partially dissipated to the outside of the container 71 through the heat conducting members 58 and the walls 71b. The heat conducting members 58 can be formed of, for example, a synthetic resin material containing a heat conductive filler (metal material). As illustrated in FIG. 17, in the embodiment, a larger amount of heat can be easily dissipated to the gaps (passages) between the two adjacent battery packs 1F rather than to the gaps between the walls 71b and the battery packs 1F. In the embodiment, the heat conducting members 58 prevent the airflow from the fan unit 60 from flowing to the gaps between the walls 71b and the battery packs 1F, thereby increasing the flow rate of the airflow through the gaps (passages) between the two adjacent battery packs 1F from, for example, that of airflow through the gaps (passages) between the walls 71b and the battery packs 1F. This can enhance a cooling effect between the two battery packs 1F, for example, and may reduce variation in the cooling effect (temperature) of the battery modules 3 depending on locations. The heat conducting members 58 are an example of a heat conductive layer. The heat conductive layer may be, for example, a heat conductive sheet, grease, or an adhesive. In place of the heat conducting members 58 provided between the walls 71b and the battery packs 1F according to the embodiment, gaps (passages) through which the airflow from the fan unit 60 flows may be provided therebetween. In addition, although in the embodiment, one fan unit 60 is provided in the container 71, two or more fan units 60 may be provided in the respective gaps (passages) between the two battery packs 1F.

As illustrated in FIG. 17, a filter unit 55 is provided in the container 71 upstream of the fan unit 60. The filter unit 55 can be configured as, for example, a two-layered filter as a combination of an inertia filter and a hepa filter. The filter unit 55 may be a combination of other types of filters, a two or more multilayered filter, or a single layer. According to the embodiment, for example, the filter unit 55 can prevent dusts, water, and the like from entering the container 71.

As illustrated in FIG. 17, the container 71 includes walls 71t. The walls 71t are referred to as partitions, bulkheads, or separation walls and extend between the filter unit 55 and the fan unit 60. The walls 71t partition the space between the upstream and downstream sides of the fan unit 60 in the container 71. This can prevent the airflow from returning to the upstream space of the fan unit 60 from downstream and being sucked into the fan unit 60 again.

As illustrated in FIG. 15, the battery device 70 is installed in the space between two wheels 102 of the railway vehicle 100 in the front-rear direction. Various instruments in addition to the battery device 70 can be installed under the floor of the railway vehicle 100. In the embodiment, since the battery device 70 includes the fan unit 60, the fan unit 60 can cool the battery packs 1F more reliably even when, for example, the air from a traveling vehicle is shielded by the other instruments. The embodiment exemplifies the container 71 with both sides opened in the lengthwise direction (front-rear direction of the railway vehicle 100), however, the container 71 may be substantially sealed as in the seventh embodiment. In this case, the fan unit 60 circulates the air in the container 71, thereby enhancing the heat dissipation of the battery packs 1F. Furthermore, liquid (fluid) may be poured into the substantially sealed container 71 to contact with the battery packs 1F and a fluid moving unit may be provided in the container 71 to cause the liquid to flow. Although the embodiment has described the discharge of the airflow from the other side end of the container 71 in the lengthwise direction, for example, the other side end may be closed by the wall and the wall 71a may be provided with an airflow outlet. During reciprocated running of the railway vehicle 100, the airflow discharge capacity of the container with an outlet opened in the front-rear direction (traveling direction) may differ between a forward route and a backward route. In view of this, by the outlet provided in the wall 71a, the airflow discharge capacity can be prevented from differing between the forward route and the backward route.

Although the embodiments of the present invention have been described above, the above-mentioned embodiments are merely examples and are not intended to limit the scope of the invention. The above-mentioned embodiments can be executed in various other modes and various omissions, replacements, combinations, and changes can be made without departing from the gist of the invention. The above-mentioned embodiments are encompassed in the scope and the gist of the invention and are encompassed in the invention that is described in the scope of the claims. The present invention can be executed by configurations other than the configurations disclosed in the above-mentioned embodiments and various effects (including derivative effects) provided by the basic configurations (technical characteristics) can be provided. Specifications (configurations, types, directions, shapes, sizes, lengths, widths, thicknesses, heights, numbers, arrangements, positions, materials, and the like) of the respective components can be appropriately changed for implementation.

## Claims

1. A battery pack (1) comprising:
a first housing (2) including a first outer wall (2c1) and a second outer wall (2c2) different from the first outer wall (2c1) ;
first plurality of battery modules (3A) fixed to the first outer wall (2c1), each including a second housing (6) and a plurality of battery cells (7) accommodated in the second housing (6);
second plurality of battery modules (3B) fixed to the second outer wall (2c2), each including a second housing (6) and a plurality of battery cells (7) accommodated in the second housing (6); and
elastic members (18,40) for pressing the first plurality of battery modules (3A) onto the first outer wall (2c1) and pressing the second plurality of battery modules (3B) onto the second outer wall (2c2).

2. The battery pack (1) according to claim 1, wherein the first outer wall (2c1) and the second outer wall (2c2) face each other.

3. The battery pack (1) according to claim 1 or 2, wherein
the first plurality of battery modules (3A) each includes a positive terminal (13) and a negative terminal (14), and
the first plurality of battery modules (3A) are aligned in a first direction on the first outer wall (2c1) such that the positive terminal (13) of each of the first plurality of battery modules (3A) is located at one side of the first direction and the negative terminal (14) of each of the first plurality of battery modules (3A) is located at the other side in the first direction.

4. The battery pack (1) according to claim 3, wherein the second plurality of battery modules (3B) each includes a positive terminal (13) and a negative terminal (14), and
the second plurality of battery modules (3B) are aligned in the first direction such that the negative terminal (14) of each of the second plurality of battery modules (3B) is located at the one side of the first direction, and the positive terminal (13) of each of the second plurality of battery modules (3B) is located at the other side in the first direction.

5. The battery pack (1) according to claim 3 or 4, wherein
the second housing (6) has a first wall (6c1) fixed to the first outer wall (2c1) or the second outer wall (2c2) and a second wall (6c2) opposite to the first wall (6c1), and the positive terminal (13) and the negative terminal (14) are located closer to the second wall (6c2).

6. The battery pack (1) according to any one of claims 1 to 5, wherein
the second housing (6) has a first wall (6c1) fixed to the first outer wall (2c1) or the second outer wall (2c2) and a second wall (6c2) opposite to the first wall (6c1), and the battery cells (7) are placed on the first wall (6c1) .

7. The battery pack (1) according to any one of claims 1 to 6, wherein
the first housing (2) is provided with an opening (33), and
at least one of the first outer wall (2c1) and the second outer wall (2c2) forms a part of the opening (33).

8. The battery pack (1) according to any one of claims 1 to 7, further comprising a plurality of brackets (16) for holding the elastic members (18) and the battery modules (3) .

9. The battery pack (1A) according to any one of claims 1 to 8, further comprising a cooling mechanism (30) that cools at least one of the first outer wall (2c1) and the second outer wall (2c2).

10. The battery pack according to any one of claims 1 to 9, further comprising a first fan (50) for generating cooling air in the first housing (2).

11. A battery device (70) comprising:
a plurality of battery packs (1) according to any one of claims 1 to 10;
a container (71) that accommodates the plurality of battery packs (1); and
a second fan (60) for generating cooling air in the container.

## Patentansprüche

1. Batteriepack (1), umfassend:
ein erstes Gehäuse (2) mit einer ersten Außenwand (2c1) und einer zweiten Außenwand (2c2), die von der ersten Außenwand (2c1) verschieden ist;
mehrere erste Batteriemodule (3A), die an der ersten Außenwand (2c1) befestigt sind und jeweils ein zweites Gehäuse (6) und mehrere Batteriezellen (7), die in dem zweiten Gehäuse (6) untergebracht sind, umfassen;
mehrere zweite Batteriemodule (3B), die an der zweiten Außenwand (2c2) befestigt sind und jeweils ein zweites Gehäuse (6) und mehrere Batteriezellen (7), die in dem zweiten Gehäuse (6) untergebracht sind, umfassen; und
elastische Elemente (18, 40) zum Drücken der mehreren ersten Batteriemodule (3A) an die erste Außenwand (2c1) und Drücken der mehreren zweiten Batteriemodule (3B) an die zweite Außenwand (2c2).

2. Batteriepack (1) nach Anspruch 1, wobei die erste Außenwand (2c1) und die zweite Außenwand (2c2) einander zugewandt sind.

3. Batteriepack (1) nach Anspruch 1 oder 2, wobei
die mehreren ersten Batteriemodule (3A) jeweils einen positiven Anschluss (13) und einen negativen Anschluss (14) umfassen und
die mehreren ersten Batteriemodule (3A) in einer ersten Richtung derart an der ersten Außenwand (2c1) ausgerichtet sind, dass der positive Anschluss (13) jedes der mehreren ersten Batteriemodule (3A) sich auf einer Seite der ersten Richtung befindet und der negative Anschluss (14) jedes der mehreren ersten Batteriemodule (3A) sich in der ersten Richtung auf der anderen Seite befindet.

4. Batteriepack (1) nach Anspruch 3, wobei die mehreren zweiten Batteriemodule (3B) jeweils einen positiven Anschluss (13) und einen negativen Anschluss (14) umfassen und
die mehreren zweiten Batteriemodule (3B) in der ersten Richtung derart ausgerichtet sind, dass der negative Anschluss (14) jedes der mehreren zweiten Batteriemodule (3B) sich auf der einen Seite der ersten Richtung befindet und der positive Anschluss (13) jedes der mehreren zweiten Batteriemodule (3B) sich in der ersten Richtung auf der anderen Seite befindet.

5. Batteriepack (1) nach Anspruch 3 oder 4, wobei
das zweite Gehäuse (6) eine erste Wand (6c1), die an der ersten Außenwand (2c1) oder der zweiten Außenwand (2c2) befestigt ist, und eine zweite Wand (6c2) gegenüber der ersten Wand (6c1) aufweist und der positive Anschluss (13) und der negative Anschluss (14) sich näher an der zweiten Wand (6c2) befinden.

6. Batteriepack (1) nach einem der Ansprüche 1 bis 5, wobei
das zweite Gehäuse (6) eine erste Wand (6c1), die an der ersten Außenwand (2c1) oder der zweiten Außenwand (2c2) befestigt ist, und eine zweite Wand (6c2) gegenüber der ersten Wand (6c1) aufweist und die Batteriezellen (7) an der ersten Wand (6c1) angeordnet sind.

7. Batteriepack (1) nach einem der Ansprüche 1 bis 6, wobei
das erste Gehäuse (2) mit einer Öffnung (33) versehen ist und
wenigstens eine aus der ersten Außenwand (2c1) und der zweiten Außenwand (2c2) einen Teil der Öffnung (33) ausbildet.

8. Batteriepack (1) nach einem der Ansprüche 1 bis 7, das ferner mehrere Halterungen (16) zum Halten der elastischen Elemente (18) und der Batteriemodule (3) umfasst.

9. Batteriepack (1A) nach einem der Ansprüche 1 bis 8, das ferner einen Kühlmechanismus (30) umfasst, der wenigstens eine aus der ersten Außenwand (2c1) und der zweiten Außenwand (2c2) kühlt.

10. Batteriepack nach einem der Ansprüche 1 bis 9, das ferner ein erstes Gebläse (50) zum Erzeugen von Kühlluft in dem ersten Gehäuse (2) umfasst.

11. Batterievorrichtung (70), umfassend:
mehrere Batteriepacks (1) nach einem der Ansprüche 1 bis 10;
einen Behälter (71), der die mehreren Batteriepacks (1) aufnimmt; und
ein zweites Gebläse (60) zum Erzeugen von Kühlluft in dem Behälter.

## Revendications

1. Bloc-batterie (1) comprenant :
un premier boîtier (2) comprenant une première paroi externe (2c1) et une deuxième paroi externe (2c2) différente de la première paroi externe (2c1) ;
une première pluralité de modules de batterie (3A) attachés à la première paroi externe (2c1), comprenant chacun un deuxième boîtier (6) et une pluralité d'éléments de pile (7) accommodés dans le deuxième boîtier (6) ;
une deuxième pluralité de modules de batterie (3B) attachés à la deuxième paroi externe (2c2), comprenant chacun un deuxième boîtier (6) et une pluralité d'éléments de pile (7) accommodés dans le deuxième boîtier (6) ; et
des éléments élastiques (18, 40) permettant de presser la première pluralité de modules de batterie (3A) sur la première paroi externe (2c1) et de presser la deuxième pluralité de modules de batterie (3B) sur la deuxième paroi externe (2c2).

2. Bloc-batterie (1) selon la revendication 1, dans lequel la première paroi externe (2c1) et la deuxième paroi externe (2c2) sont positionnées l'une en face de l'autre.

3. Bloc-batterie (1) selon la revendication 1 ou la revendication 2, dans lequel
la première pluralité de modules de batterie (3A) comprend chacun une borne positive (13) et une borne négative (14), et
la première pluralité de modules de batterie (3A) sont alignés dans une première direction de la première paroi externe (2c1) de telle sorte que la borne positive (13) de chacun de la première pluralité de modules de batterie (3A) est situé au niveau d'un côté de la première direction et la borne négative (14) de chacun de la première pluralité de modules de batterie (3A) est située au niveau de l'autre côté dans la première direction.

4. Bloc-batterie (1) selon la revendication 3, dans lequel la deuxième pluralité de modules de batterie (3B) comprend chacun une borne positive (13) et une borne négative (14), et
la deuxième pluralité de modules de batterie (3B) sont alignés dans la première direction de telle sorte que la borne négative (14) de chacun de la deuxième pluralité de modules de batterie (3B) est situé au niveau d'un côté de la première direction, et la borne positive (13) de chacun de la deuxième pluralité de modules de batterie (3B) est située au niveau de l'autre côté dans la première direction.

5. Bloc-batterie (1) selon la revendication 3 ou la revendication 4, dans lequel
le deuxième boîtier (6) comporte une première paroi (6c1) attachée à la première paroi externe (2c1) ou à la deuxième paroi externe (2c2) et une deuxième paroi (6c2) située à l'opposé de la première paroi (6c1), et la borne positive (13) et la borne négative (14) sont situées plus près de la deuxième paroi (6c2).

6. Bloc-batterie (1) selon l'une quelconque des revendications 1 à 5, dans lequel
le deuxième boîtier (6) comporte une première paroi (6c1) attachée à la première paroi extérieure (2c1) ou à la deuxième paroi extérieure (2c2) et une deuxième paroi (6c2) située à l'opposé de la première paroi (6c1), et les éléments de pile (7) sont placés sur la première paroi (6c1).

7. Bloc-batterie (1) selon l'une quelconque des revendications 1 à 6, dans lequel
le premier boîtier (2) est muni d'une ouverture (33), et
au moins l'une parmi la première paroi extérieure (2c1) et la deuxième paroi extérieure (2c2) forme une partie de l'ouverture (33).

8. Bloc-batterie (1) selon l'une quelconque des revendications 1 à 7, comprenant en outre une pluralité de supports (16) permettant de maintenir les éléments élastiques (18) et les modules de batterie (3).

9. Bloc-batterie (1A) selon l'une quelconque des revendications 1 à 8, comprenant en outre un mécanisme de refroidissement (30) qui refroidit au moins l'une parmi la première paroi extérieure (2c1) et la deuxième paroi extérieure (2c2).

10. Bloc-batterie selon l'une quelconque des revendications 1 à 9, comprenant en outre un premier ventilateur (50) permettant de générer de l'air de refroidissement dans le premier boîtier (2).

11. Dispositif de batterie (70) comprenant :
une pluralité de bloc-batteries (1) selon l'une quelconque des revendications 1 à 10 ;
un récipient (71) qui accommode la pluralité de bloc-batteries (1) ; et
un deuxième ventilateur (60) permettant de générer de l'air de refroidissement dans le récipient.
